# EUROPEAN PATENT SPECIFICATION

(11) **EP 2 944 531 B1**
(45) Date of publication and mention of the grant of the patent: **31.10.2018**
(21) Application number: 14168202.1
(22) Date of filing: 14.05.2014
(51) Int. Cl.: B60W 30/14, B60W 50/14

(54) **Traffic based control system**
Verkehrsbasiertes Steuerungssystem
Système de commande en fonction du trafic

(43) Date of publication of application: 18.11.2015
(73) Proprietor: Volvo Car Corporation, 40531 Göteborg (SE)
(72) Inventor: Christensen, Claus Allan, 2300 Köpenhamn (DK); Olesen, Anna, 2000 Fredriksberg (DK); Nolhage, Jesper, 1753 Köpenhamn V (DK); Lohse, Henrik, 3060 Espergærde (DK); Olsen, Kee, 2770 Kastrup (DK)
(74) Representative: Valea AB

(56) References cited:
- EP-A2- 1 845 003
- DE-A1- 19 958 520
- DE-A1-102011 121 442
- JP-A- 2000 231 700

## Description

### Technical field

The present invention relates generally to a vehicle mounted system for facilitating driving.

### Background

The complexity of the traffic situation is steadily increasing. It is not just the amount of traffic on the roads that increases, also the amount of other information that a driver of a vehicle needs to process increases, such as road signs, traffic lights, information boards etc.

To aid the driver in such a complex traffic environment, a number of computer based systems for facilitating driving have been developed. Such computer based systems include vision based devices. For example US20120313770A1D1 disclose a driver assistance detection system comprising a vision-based detection device.

Prior art document D1, EP 1845 003 A2, discloses a system having an environment sensor system (10) for detecting a traffic environment, and a vehicle sensor system (12) for detecting a condition of a vehicle. An intelligent condition analyzing device (20) detects a waiting state and a termination of the state of the vehicle based on data of the sensor systems independent of an active condition of a distance regulating system with stop and go functions. Output devices (22, 24) output a guiding reference to a driver of the vehicle, when the driver starts the vehicle not within a preset time period.

There is a constant desire to improve vehicle mounted computer based systems for aiding in driving a vehicle to meet the demands from the ever increasing complexity in the driving environment. Hence there exists a need for an improved vehicle mounted computer based system for facilitating driving.

### Summary of invention

It is an object of the present invention to provide a vehicle mounted computer based system that facilitates driving.

This object and/or others are met by the methods and devices as set out in the appended claims.

As has been realized by the inventors it would be good if a driver would be alerted when the traffic ahead starts to move. This can be achieved in that the driver is notified via some alert device located in the vehicle. The alert device is in turn controlled by a processor unit that is fed with input signals from a forward facing sensor. The forward facing sensor can be a camera that can detect a change in traffic ahead of the vehicle such as traffic light shift from red to green. The forward facing sensor can also be a radar adapted to detect movement ahead of the vehicle or even a vehicle- to vehicle communication equipment. When the traffic situation ahead of the vehicle is about to change as determined by the processor unit the processor unit sends out an alert signal.

In accordance with one embodiment a vehicle mounted system for monitoring traffic is provided. The system can comprise a forward facing camera, a processor unit and, an alert device that can be connected. The processor unit is adapted to, based on signals received from the camera, generate an output an alert signal to the alert device alerting a driver or an adaptive cruise control that the traffic situation is about to change. Hereby it is obtained that the driver is alerted when traffic ahead is starts/ is about to start moving.

In accordance with one embodiment the processor unit is adapted to detect a change a traffic light from red to green and is further adapted to output the alert signal based on the detection of the change in the traffic light from red to green.

In accordance with one embodiment the system further comprises a radar, and where the processor unit is adapted to receive signals from the radar and to generate the alert signal based on the radar signal.

Further, the alert device can be one or more of a mobile device, a haptic device, a speaker, and a vehicle mounted display.

In accordance with one embodiment, an adaptive cruise control is adapted to receive the alert signal and start moving the vehicle upon receipt of such an alert signal.

The disclosure also extends to a method for aiding a driver in a vehicle provided with a device as described herein. Also disclosed is instructions for a software program that can be used for implementing the method. The software can be in the form of a computer program product or a computer program. The hardware used to execute the software can comprise one or many processors that can be arranged to execute software stored in a readable storage media. The processor(s) can be implemented by a single dedicated processor, by a single shared processor, or by a plurality of individual processors, some of which may be shared or distributed. Moreover, a processor may include, without limitation, digital signal processor (DSP) hardware, ASIC hardware, read only memory (ROM), random access memory (RAM), and/or other storage media.

### Brief description of the drawings

The invention is now described, by way of non-limiting examples, with reference to the accompanying drawings, in which:
Fig. 1 is a general view of a vehicle provided with a traffic monitoring system,
Fig. 2 is a flowchart illustrating some steps performed in a vehicle mounted system for monitoring traffic in accordance with a first embodiment,
Fig. 3 is a flowchart is a flowchart illustrating some steps performed in a vehicle mounted system for monitoring traffic in accordance with a second embodiment,
Fig. 4 is a view of a processor device for processing signals in a vehicle mounted system for monitoring traffic, and
Fig. 5 is a flowchart illustrating some steps performed in a processor unit of a vehicle mounted system for monitoring traffic.

### Description of embodiments

In the following, a detailed description of the invention will be given. In the drawing figures, like reference numerals designate identical or corresponding elements throughout the several figures. It will be appreciated that these figures are for illustration only and are not in any way restricting the scope of the invention. The description below refers to a vehicle. A vehicle can be any road motorized vehicle such as a car, a lorry, a bus or a truck.

In today's traffic situation it is not uncommon that a vehicle stands still. This can for example be because there is a red light or because there is heavy traffic that is not moving ahead of the vehicle. In such a situation the driver can, typically, divert his/her attention to other things than driving the vehicle, such as adjusting the radio etc. When the traffic ahead of the vehicle starts to move, there can then be some time before the driver reacts. This in turn can cause irritation among fellow drivers of other vehicles and also the traffic flow is negatively impacted. Hence, it would be good if a driver would be alerted when the traffic ahead starts to move. This can be achieved in some different ways as will be described below.

Generally, the driver is notified via some alert device located in the vehicle. The alert device is in turn controlled by a processor unit that is fed with input signals from a forward facing sensor. The forward facing sensor can be a camera that can detect a change in traffic ahead of the vehicle such as traffic light shift from red to green. The forward facing sensor can also be a radar adapted to detect movement ahead of the vehicle. When the traffic situation ahead of the vehicle is about to change as determined by the processor unit, the processor unit sends out an alert signal.

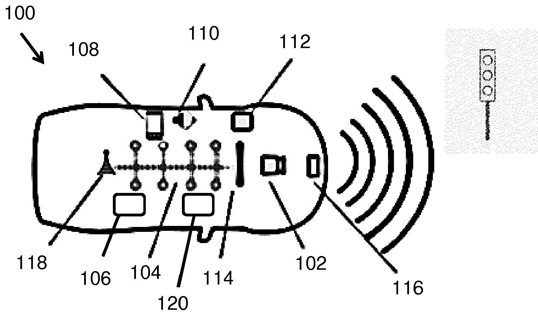

In Fig 1 a general view of a vehicle **100** provided with an exemplary traffic monitoring system is depicted. In accordance with some embodiments the traffic monitoring system comprises a forward facing camera **102**. The forward facing camera can be connected to an internal communication system of the vehicle such as a CAN bus **104**.A processor unit **106** can also be connected to the internal communication system. The processor unit 106 receives signals and issue different control signals in response to the received signals. For example the processor unit 106 can issue signals to an adaptive cruise control (ACC) **120**. The processor unit 106 can also issue signals to one or more alert devices for alerting the driver located in the vehicle. Examples of alert devices can be a mobile device **108** such as a smart phone, a tablet, etc., or a speaker **110**. The alert device can also be a haptic device **112** or a vehicle mounted display unit **114**. In case the alert device is a haptic device, the haptic device can for example be a signal emitted from the steering wheel, the driver seat or the brake pedal. The processor unit 106 can also receive input signals from other devices. The other devices can for example be a radar **116** or a signal from a vehicle to vehicle communications equipment **118.**

In response to the signals received from the camera 102 and/ or from other sensors or support systems such as the radar 116 or the vehicle to vehicle communications system, the processor unit 106 issues an alert signal. The alert signal can be fed to one or more of the alert devices in the vehicle. The alert device in turn issues an alert signal that can be detected by the driver. If the vehicle is provided with an ACC 120 and the ACC is activated, the ACC can act on the alert signal from the processor unit 106.

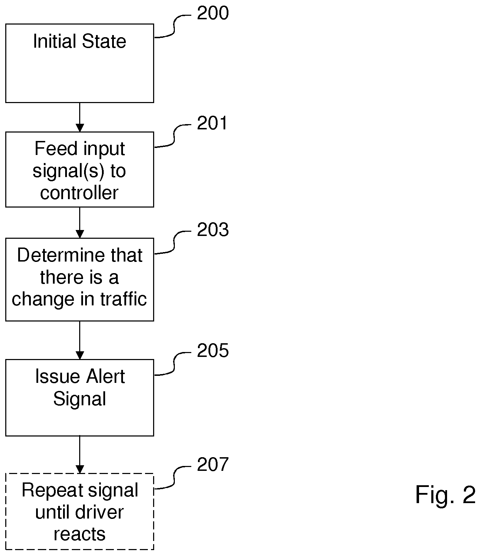

In Fig. 2 a flow chart illustrating some steps performed in a vehicle mounted system for monitoring traffic when the alert signal is issued by one or more alert devices in the vehicle. It is assumed that the vehicle is standing still for example as a result of a red light or a traffic jam when the procedure in Fig. 2 is started in step **200**. First, in a step **201**, signals from a number of different sensors 102, 116 and communications equipment 118 within the vehicle 100 that monitor the traffic situation ahead of the vehicle are fed to a processor unit 106 for example via a CAN bus 104. Next, in a step **203**, it is determined by the processor unit 106 if there is a change in the traffic situation ahead of the vehicle, such as shift in a traffic light or that the brake lights of vehicles ahead are turned off or that the vehicles ahead start moving. When the processor unit 106 determines that there is a change in the traffic situation ahead, the processor unit issues an alert signal to one or more of the alert devices (such as a speaker, a smart phone, a haptic device or a display) in the vehicle in a step **205**. For example a sound can be emitted from the speaker or an alert signal can be emitted from the smart phone as a sound or light signal. Also, the color on a vehicle mounted display can be caused to change or a haptic signal can be emitted via, for example, the steering wheel, the driver seat or the brake pedal. In some embodiments the alert signal is repeated or continued in a step **207** until the driver takes some action for example by pressing the accelerator.

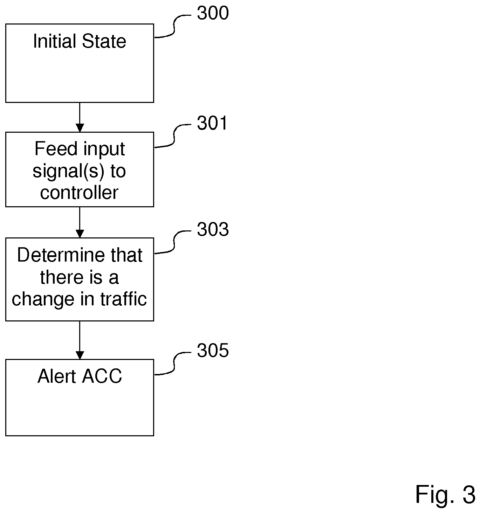

In Fig. 3 a flow chart illustrating some steps performed in a vehicle mounted system for monitoring traffic when the alert signal is issued by one or more alert devices in the vehicle. It is assumed that the vehicle is standing still for example as a result of a red light or a traffic jam when the procedure in Fig. 3 is started in step **300**. It is further assumed that the vehicle is equipped with an adaptive cruise control (ACC) that enables the vehicle to move without the input from a driver. First, in a step **301**, signals from a number of different sensors 102, 116 and communications equipment 118 within the vehicle 100 that monitor the traffic situation ahead of the vehicle are fed to a processor unit 106 for example via a CAN bus 104. Next, in a step **303**, it is determined by the processor unit 106 if there is a change in the traffic situation ahead of the vehicle, such as shift in a traffic light or that the brake lights of vehicles ahead are turned off or that the vehicles ahead start moving. When the processor unit 106 determines that there is a change in the traffic situation ahead, the processor unit 106 issues an alert signal to the ACC 120. When the ACC 120 receives the alert signal from the processor unit 106 that the traffic ahead starts to move, the ACC takes appropriate action and can for example start to move in a step **305**.

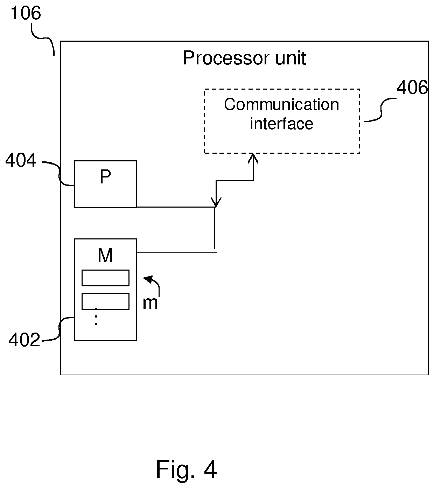

Fig. 4 is a view of a processor unit 106 for processing signals in a vehicle mounted system for monitoring traffic. The processor unit 106 can comprise computer program modules in a memory **402** of a respective computer program comprising executable program code which, when run by a processor **404** causes the processor unit 106 to perform the actions as described herein. The processor 404 may comprise a single Central Processing Unit (CPU), or could comprise two or more processing units. For example, the processor 404 may include general purpose microprocessors; instruction set processors and/or related chips sets and/or special purpose microprocessors such as Application Specific Integrated Circuits (ASICs). The processor 404 may also comprise a storage for caching purposes.

The memory 402 thus comprises a computer readable medium on which a computer program is stored e.g. in the form of computer program modules "m". For example, the memory 402 can be a flash memory, a Random-Access Memory (RAM), a Read-Only Memory (ROM) or an Electrically Erasable Programmable ROM (EEPROM), and the program modules m could in alternative embodiments be distributed on different computer program products in the form of memories within the processor unit 106.

The processor unit 106 can further comprise a communication interface **406**. The communication interface 406 may be arranged to communicate with for example the camera 102, the radar 116 and the vehicle to vehicle communications equipment 118. In one embodiment the communication interface 406 can comprise chip set adopted for communication via CAN bus (Controller Area Network) or communication adopted to ISO 11898. Other examples of standards which may be supported by the communication interface 406 are: Zig Bee, Bluetooth, RFID (Radio frequency identification), USB (Universal serial bus), or IEEE 802.11 (Institute of Electrical and Electronics Engineers), including but not limited to 802.11a/b/n or other similar forthcoming standards. The communication interface 406 can comprise an antenna. The communication interface 406 can further be arranged to communicate with one or more alert devices as set out above.

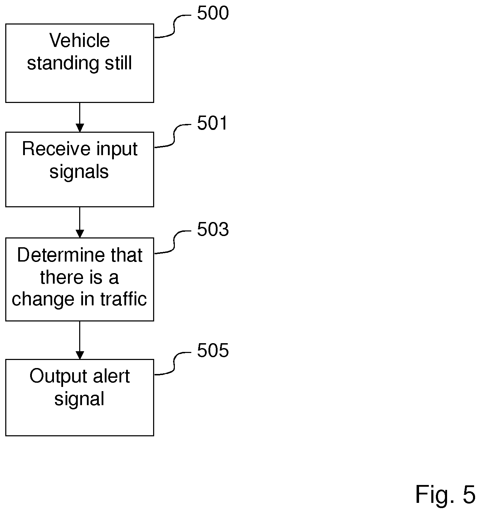

In Fig. 5 a flowchart illustrating some computer program instructions that can be executed in a processor unit of a vehicle mounted system for monitoring traffic is shown. The steps are typically performed using a computer program stored in a memory accessible by the processor unit. First in a step **500** the processing unit determines that the vehicle 100 is at standing still. This can for example be done by receiving signals for the motor and transmission of the vehicle. Next in a step **501**, the processor unit starts to monitor different signals received via an interface, such as the interface 406 above. Based on the received signals in step 501, the processor unit determines if there is a change in traffic ahead of the vehicle in a step **503**. The determination in step 503 can be done in many different ways. For example if the input signal is a camera signal, the camera signal can be used to determine if there is a change in a traffic light or if the brake lights of vehicles ahead of the vehicle are turned off. In another example a radar signal is used. The radar signal is then used to determine if a vehicle ahead of the vehicle 100 is moving. In yet another embodiment a signal from a vehicle to vehicle communications equipment is used to determine whether the traffic ahead of the vehicle starts to move. For example if a signal is received from a vehicle ahead of the vehicle 100 via a vehicle to vehicle communications equipment indicating the vehicle ahead starts to move. It is envisaged that different input signals from different sensors and/or communication devices can be used together as a combined input signal when determining when the traffic situation is changing.

When a determination is made in the processor unit that the monitored traffic situation is changing a suitable output signal can be generated and transmitted in a step **505**. The output signal can for example be transmitted via the interface 406. As set out above, depending on the capabilities and some settings the output signal can be transmitted to one or more of some predefined receiver devices. The receiver device can hence for example be an ACC if present and activated. The receiver device can also be one or more of the alert devices in the vehicle as described above. In other words the receiver can be a mobile device 108 such as a smart phone a tablet, etc., or a speaker 110. The receiver can also be a haptic device 112 or a vehicle mounted display unit 114. In case the receiver is a haptic device, the haptic device can for example be located in the steering wheel, the driver seat or the brake pedal of the vehicle.

Using the methods, computer programs and computer programs and devices as set out herein it is possible to achieve a better flow in the traffic. This is made possible in that a driver (or an ACC) is alerted when there is a change in traffic ahead of a vehicle. The driver can then be alert and ready to accelerate without any delay.

## Claims

1. A vehicle mounted system for monitoring traffic, the system comprising:
- a forward facing camera (102) and a radar (116)
- a processor unit (106),
- an alert device (108, 110, 112, 114),
- an adaptive cruise control (120) enabling the vehicle to move without the input from a driver and for automatically adjusting the vehicle speed to maintain a safe distance from vehicles ahead
the processor unit (106) is adapted, based on signals received from the camera (102), to detect a change of a traffic light from red to green, and based on signals received from the radar (116) to detect movement ahead of the vehicle and is further adapted to generate an alert signal, based on the input from the camera (102) and radar (116), to the alert device (108, 110, 112, 114) adapted to alert a driver that the traffic situation is about to change
**characterized in that**
said alert signal is based on the combined input from the camera (102) and the radar (116) and if said adaptive cruise control (120) is activated, the processor unit is adapted to issue the alert signal to the adaptive cruise control (120) and said adaptive cruise control (120) is adapted to start move the vehicle upon receipt of such an alert signal.

2. The system according to claim 1, wherein the system further comprises a vehicle to vehicle communications equipment (118), and where the processor unit is adapted to receive signals from the vehicle to vehicle communications equipment (118) and to generate the alert signal based on the combined input from the camera (102), radar (116) and vehicle to vehicle communications equipment (118).

3. The system according to any of claims 1 or 2, wherein the alert device is one or more of a mobile device (108), a haptic device (112), a speaker (110), and a vehicle mounted display (114).

4. A method for driver aid in a vehicle, the vehicle being provided with a vehicle mounted system for monitoring traffic, the system comprising:
- a forward facing camera (102) and a radar (116),
- a processor unit (106),
- an alert device (108, 110, 112, 114),
- an adaptive cruise control (120) enabling the vehicle to move without the input from a driver and for automatically adjusting the vehicle speed to maintain a safe distance from vehicles ahead
wherein the method comprising
detecting a change a traffic light from red to green based on signals received by the processor unit (106) from the camera (102),
detecting movement ahead of the vehicle based on signals received by the processor unit (106) from the radar (116)
generating (205) an alert signal to the alert device (108, 110, 112, 114) based on the input from the camera (102) and radar (116) alerting a driver that the traffic situation is about to change
and **is characterized by**
basing said alert signal on the combined input from the camera (102) and the radar (116) and if said adaptive cruise control (120) is activated,
issuing the alert signal to the adaptive cruise control (120) and start move the vehicle upon receipt of such an alert signal.

5. The method according to claim 4, wherein the system further comprises a vehicle to vehicle communications equipment (118), and where the processor unit receives signals from the vehicle to vehicle communications equipment (118) and generates the alert signal based on the combined input from the camera (102), radar (116) and vehicle to vehicle communications equipment (118).

6. The method according to any of claims 4 or 5, wherein the alert device is one or more of a mobile device (108), a haptic device (112), a speaker (110), and a vehicle mounted display (114).

7. A computer program product comprising a non-transitory computer readable medium storing computer instructions for generating an alert signal in a vehicle being provided with a vehicle mounted system for monitoring traffic, the system comprising:
- a forward facing camera (102) and a radar (116),
- a processor unit (106),
- an alert device (108, 110, 112, 114),
- an adaptive cruise control (120) enabling the vehicle to move without the input from a driver and for automatically adjusting the vehicle speed to maintain a safe distance from vehicles ahead,
the computer instructions comprising:
instructions (505) for
detecting a change a traffic light from red to green based on signals received by the processor unit (106) from the camera (102),
detecting movement ahead of the vehicle based on signals received by the processor unit (106) from the radar (116)
generating (205) an alert signal to the alert device (108, 110, 112, 114) based on the input from the camera (102) and radar (116) alerting a driver that the traffic situation is about to change
and is **characterized by** basing said alert signal on the combined input from the camera (102) and the radar (116) and if said adaptive cruise control (120) is activated,
issuing the alert signal to the adaptive cruise control (120) and start move the vehicle upon receipt of such an alert signal.

8. A computer program comprising computer instructions for generating an alert signal in a vehicle being provided with a vehicle mounted system for monitoring traffic, the system comprising:
- a forward facing camera (102) and a radar (116),
- a processor unit (106)
- an alert device (108,110, 112, 114)
- an adaptive cruise control (120) enabling the vehicle to move without the input from a driver and for automatically adjusting the vehicle speed to maintain a safe distance from vehicles ahead,
the computer instructions comprising software code causing a processor executing the computer instructions to:
- detecting a change a traffic light from red to green based on signals received by the processor unit (106) from the camera (102),
- detecting movement ahead of the vehicle based on signals received by the processor unit (106) from the radar (116)
- generating (205) an alert signal to the alert device (108, 110, 112, 114) based on the input from the camera (102) and radar (116) alerting a driver that the traffic situation is about to change
and is **characterized by** basing said alert signal on the combined input from the camera (102) and the radar (116) and if said adaptive cruise control (120) is activated,
- issuing the alert signal to the adaptive cruise control (120) and start move the vehicle upon receipt of such an alert signal.

9. A vehicle (100) comprising the system in accordance with any of claims 1 - 3.

## Patentansprüche

1. Fahrzeugmontiertes System zur Verkehrsüberwachung, wobei das System Folgendes umfasst:
eine nach vorne weisende Kamera (102) und ein Radar (116)
eine Prozessoreinheit (106),
eine Alarmvorrichtung (108, 110, 112, 114),
eine Abstandsregelungsvorrichtung (120), die ermöglicht, dass sich das Fahrzeug ohne Fahrereingriff bewegt, und die Fahrzeuggeschwindigkeit automatisch anpasst, um einen sicheren Abstand zu den vorderen Fahrzeugen aufrechtzuerhalten,
wobei die Prozessoreinheit (106) ausgelegt ist, basierend auf Signalen, die von der Kamera (102) empfangen werden, eine Änderung einer Verkehrsampel von rot auf grün zu detektieren und basierend auf Signalen, die von dem Radar (116) empfangen werden, die Bewegung vor dem Fahrzeug zu detektieren, und ferner ausgelegt ist, basierend auf der kombinierten Eingabe von der Kamera (102) und dem Radar (116) ein Alarmsignal zu der Alarmvorrichtung (108, 110, 112, 114) zu erzeugen, die ausgelegt ist, einen Fahrer zu warnen, dass sich die Verkehrssituation ändert,
**dadurch gekennzeichnet, dass**
das Alarmsignal auf der kombinierten Eingabe von der Kamera (102) und dem Radar (116) basiert und die Prozessoreinheit ausgelegt ist, dann, wenn die Abstandsregelungsvorrichtung (120) aktiviert ist, das Alarmsignal zu der Abstandsregelungsvorrichtung (120) auszugeben, und die Abstandsregelungsvorrichtung (120) ausgelegt ist, bei Empfang eines solchen Alarmsignals zu beginnen, das Fahrzeug zu bewegen.

2. System nach Anspruch 1, wobei das System ferner eine Fahrzeug-zu-Fahrzeug-Kommunikationseinrichtung (118) umfasst und wobei die Prozessoreinheit ausgelegt ist, Signale aus der Fahrzeug-zu-Fahrzeug-Kommunikationseinrichtung (118) zu empfangen und das Alarmsignal basierend auf der kombinierten Eingabe von der Kamera (102), dem Radar (116) und der Fahrzeug-zu-Fahrzeug-Kommunikationseinrichtung (118) zu erzeugen.

3. System nach einem der Ansprüche 1 oder 2, wobei die Alarmvorrichtung eine mobile Vorrichtung (108) und/oder eine Haptik-Vorrichtung (112) und/oder ein Lautsprecher (110) und/oder eine am Fahrzeug montierte Anzeigevorrichtung (114) ist.

4. Verfahren zur Fahrerassistenz in einem Fahrzeug, wobei das Fahrzeug mit einem am Fahrzeug montierten System zur Verkehrsüberwachung ausgestattet ist, wobei das System Folgendes umfasst:
eine nach vorne weisende Kamera (102) und ein Radar (116),
eine Prozessoreinheit (106),
eine Alarmvorrichtung (108, 110, 112, 114),
eine Abstandsregelungsvorrichtung (120), die ermöglicht, dass sich das Fahrzeug ohne Fahrereingriff bewegt, und die Fahrzeuggeschwindigkeit automatisch anpasst, um einen sicheren Abstand zu den vorderen Fahrzeugen aufrechtzuerhalten,
wobei das Verfahren Folgendes umfasst:
Detektieren einer Änderung einer Verkehrsampel von rot zu grün basierend auf Signalen, die durch die Prozessoreinheit (106) von der Kamera (102) empfangen werden,
Detektieren der Bewegung vor dem Fahrzeug basierend auf Signalen, die durch die Prozessoreinheit (106) von dem Radar (116) empfangen werden, und
Erzeugen (205) eines Alarmsignals für die Alarmvorrichtung (108, 110, 112, 114) basierend auf der Eingabe von der Kamera (102) und dem Radar (116), das einen Fahrer warnt, dass sich die Verkehrssituation ändert,
**gekennzeichnet durch**
Basieren des Alarmsignals auf der kombinierten Eingabe von der Kamera (102) und dem Radar (116), und dann, wenn die Abstandsregelungsvorrichtung (120) aktiviert ist, Ausgeben des Alarmsignals zu der Abstandsregelungsvorrichtung (120) und bei Empfang eines solchen Alarmsignals Beginnen mit dem Bewegen des Fahrzeugs.

5. Verfahren nach Anspruch 4, wobei das System ferner eine Fahrzeug-zu-Fahrzeug-Kommunikationseinrichtung (118) umfasst und wobei die Prozessoreinheit Signale aus der Fahrzeug-zu-Fahrzeug-Kommunikationseinrichtung (118) empfängt und das Alarmsignal basierend auf der kombinierten Eingabe von der Kamera (102), dem Radar (116) und der Fahrzeug-zu-Fahrzeug-Kommunikationseinrichtung (118) erzeugt.

6. Verfahren nach einem der Ansprüche 4 oder 5, wobei die Alarmvorrichtung eine mobile Vorrichtung (108), einer Haptik-Vorrichtung (112), einem Lautsprecher (110) und einer am Fahrzeug montierten Anzeigevorrichtung (114) ist.

7. Computerprogrammprodukt, das ein nichttransitorisches computerlesbares Medium umfasst, das Computeranweisungen zum Erzeugen eines Alarmsignals in einem Fahrzeug, das mit einem am Fahrzeug montierten System zum Überwachen von Verkehr ausgestattet ist, speichert, wobei das System Folgendes umfasst:
eine nach vorne weisende Kamera (102) und ein Radar (116),
eine Prozessoreinheit (106),
eine Alarmvorrichtung (108, 110, 112, 114),
eine Abstandsregelungsvorrichtung (120), die ermöglicht, dass sich das Fahrzeug ohne Fahrereingriff bewegt, und die Fahrzeuggeschwindigkeit automatisch anpasst, um einen sicheren Abstand zu den vorderen Fahrzeugen aufrechtzuerhalten,
wobei die Computeranweisungen Folgendes umfassen:
Anweisungen (505) zum Detektieren einer Änderung einer Verkehrsampel von rot zu grün basierend auf Signalen, die durch die Prozessoreinheit (106) aus der Kamera (102) empfangen werden,
Detektieren der Bewegung vor dem Fahrzeug basierend auf Signalen, die durch die Prozessoreinheit (106) von dem Radar (116) empfangen werden, und
Erzeugen (205) eines Alarmsignals für die Alarmvorrichtung (108, 110, 112, 114) basierend auf der Eingabe von der Kamera (102) und dem Radar (116), das einen Fahrer warnt, dass sich die Verkehrssituation ändert,
und ist **gekennzeichnet durch** Basieren des Alarmsignals auf der kombinierten Eingabe von der Kamera (102) und dem Radar (116) und dann, wenn die Abstandsregelungsvorrichtung (2) aktiviert ist, Ausgeben des Alarmsignals zu der Abstandsregelungsvorrichtung (120) und bei dem Empfang eines solchen Alarmsignals Beginnen mit dem Bewegen des Fahrzeugs.

8. Computerprogramm, das Computeranweisungen zum Erzeugen eines Alarmsignals in einem Fahrzeug, das mit einem am Fahrzeug montierten System zur Verkehrsüberwachung ausgestattet ist, umfasst, wobei das System Folgendes umfasst:
eine nach vorne weisende Kamera (102) und ein Radar (116),
eine Prozessoreinheit (106)
eine Alarmvorrichtung (108, 110, 112, 114)
eine Abstandsregelungsvorrichtung (120), die ermöglicht, dass sich das Fahrzeug ohne Fahrereingriff bewegt, und die Fahrzeuggeschwindigkeit automatisch anpasst, um einen sicheren Abstand zu den vorderen Fahrzeugen aufrechtzuerhalten,
wobei die Computeranweisungen Software-Code enthalten, der bewirkt, dass ein Prozessor die Computeranweisungen ausführt zum:
Detektieren einer Änderung einer Verkehrsampel von rot zu grün basierend auf Signalen, die durch die Prozessoreinheit (106) von der Kamera (102) empfangen werden,
Detektieren der Bewegung vor dem Fahrzeug basierend auf Signalen, die durch die Prozessoreinheit (106) von dem Radar (116) empfangen werden, und
Erzeugen (205) eines Alarmsignals für die Alarmvorrichtung (108, 110, 112, 114) basierend auf der Eingabe von der Kamera (102) und dem Radar (116), das einen Fahrer warnt, dass sich die Verkehrssituation ändert,
und ist **gekennzeichnet durch** Basieren des Alarmsignals auf der kombinierten Eingabe von der Kamera (102) und dem Radar (116) und dann, wenn die Abstandsregelungsvorrichtung (2) aktiviert ist,
Ausgeben des Alarmsignals zu der Abstandsregelungsvorrichtung (120) und bei dem Empfang eines solchen Alarmsignals Beginnen mit dem Bewegen des Fahrzeugs.

9. Fahrzeug (100), das das System nach einem der Ansprüche 1-3 enthält.

## Revendications

1. Système monté sur un véhicule destiné à surveiller le trafic, le système comprenant :
- une caméra frontale (102) et un radar (116),
- une unité de traitement (106),
- un dispositif d'alerte (108, 110, 112, 114),
- un régulateur de vitesse adaptatif (120) permettant au véhicule de se déplacer sans l'intervention d'un conducteur et destiné à ajuster automatiquement la vitesse du véhicule afin de maintenir une distance de sécurité par rapport à des véhicules situés devant,
l'unité de traitement (106) étant adaptée, sur la base de signaux reçus depuis la caméra (102), à détecter un passage d'un feu de signalisation du rouge au vert et, sur la base de signaux reçus depuis le radar (116), à détecter un mouvement devant le véhicule et étant adaptée en outre à générer un signal d'alerte, sur la base de l'entrée issue de la caméra (102) et du radar (116), à destination du dispositif d'alerte (108, 110, 112, 114) adapté à alerter un conducteur d'un changement imminent de l'état du trafic,
le système étant **caractérisé en ce que**
ledit signal d'alerte est basé sur l'entrée combinée issue de la caméra (102) et du radar (116) et, si ledit régulateur de vitesse adaptatif (120) est activé, l'unité de traitement est adaptée à délivrer le signal d'alerte au régulateur de vitesse adaptatif (120) et ledit régulateur de vitesse adaptatif (120) est adapté à mettre le véhicule en mouvement dès réception d'un tel signal d'alerte.

2. Système selon la revendication 1, lequel système comprend en outre un équipement de communications de véhicule à véhicule (118), et dans lequel l'unité de traitement est adaptée à recevoir des signaux depuis l'équipement de communications de véhicule à véhicule (118) et à générer le signal d'alerte sur la base de l'entrée combinée issue de la caméra (102), du radar (116) et de l'équipement de communications de véhicule à véhicule (118).

3. Système selon l'une quelconque des revendications 1 ou 2, dans lequel le dispositif d'alerte est au moins un dispositif dans le groupe constitué par un dispositif mobile (108), un dispositif haptique (112), un haut-parleur (110) et un affichage monté sur véhicule (114).

4. Procédé d'aide à un conducteur dans un véhicule, le véhicule étant équipé d'un système monté sur véhicule destiné à surveiller le trafic, le système comprenant :
- une caméra frontale (102) et un radar (116),
- une unité de traitement (106),
- un dispositif d'alerte (108, 110, 112, 114),
- un régulateur de vitesse adaptatif (120) permettant au véhicule de se déplacer sans l'intervention d'un conducteur et destiné à ajuster automatiquement la vitesse du véhicule afin de maintenir une distance de sécurité par rapport à des véhicules situés devant,
le procédé comprenant les étapes consistant à :
détecter un passage d'un feu de signalisation du rouge au vert sur la base de signaux reçus par l'unité de traitement (106) depuis la caméra (102),
détecter un mouvement devant le véhicule sur la base de signaux reçus par l'unité de traitement (106) depuis le radar (116),
générer (205) un signal d'alerte à destination du dispositif d'alerte (108, 110, 112, 114) sur la base de l'entrée issue de la caméra (102) et du radar (116), alertant un conducteur d'un changement imminent de l'état du trafic,
et le procédé étant **caractérisé par** l'étape consistant à
baser ledit signal d'alerte sur l'entrée combinée issue de la caméra (102) et du radar (116) et, si ledit régulateur de vitesse adaptatif (120) est activé, délivrer le signal d'alerte au régulateur de vitesse adaptatif (120) et mettre le véhicule en mouvement dès réception d'un tel signal d'alerte.

5. Procédé selon la revendication 4, lequel système comprend en outre un équipement de communications de véhicule à véhicule (118), et dans lequel l'unité de traitement reçoit des signaux depuis l'équipement de communications de véhicule à véhicule (118) et génère le signal d'alerte sur la base de l'entrée combinée issue de la caméra (102), du radar (116) et de l'équipement de communications de véhicule à véhicule (118).

6. Procédé selon l'une quelconque des revendications 4 ou 5, dans lequel le dispositif d'alerte est au moins un dispositif dans le groupe constitué par un dispositif mobile (108), un dispositif haptique (112), un haut-parleur (110) et un affichage monté sur véhicule (114).

7. Produit-programme d'ordinateur comprenant un support non transitoire lisible par ordinateur stockant des instructions d'ordinateur pour générer un signal d'alerte dans un véhicule équipé d'un système monté sur véhicule destiné à surveiller le trafic, le système comprenant :
- une caméra frontale (102) et un radar (116),
- une unité de traitement (106),
- un dispositif d'alerte (108, 110, 112, 114),
- un régulateur de vitesse adaptatif (120) permettant au véhicule de se déplacer sans l'intervention d'un conducteur et destiné à ajuster automatiquement la vitesse du véhicule afin de maintenir une distance de sécurité par rapport à des véhicules situés devant,
les instructions d'ordinateur comprenant :
des instructions (505) pour
détecter un passage d'un feu de signalisation du rouge au vert sur la base de signaux reçus par l'unité de traitement (106) depuis la caméra (102),
détecter un mouvement devant le véhicule sur la base de signaux reçus par l'unité de traitement (106) depuis le radar (116),
générer (205) un signal d'alerte à destination du dispositif d'alerte (108, 110, 112, 114) sur la base de l'entrée issue de la caméra (102) et du radar (116), alertant un conducteur d'un changement imminent de l'état du trafic,
et le produit-programme d'ordinateur étant **caractérisé par** le fait de baser ledit signal d'alerte sur l'entrée combinée issue de la caméra (102) et du radar (116) et, si ledit régulateur de vitesse adaptatif (120) est activé,
délivrer le signal d'alerte au régulateur de vitesse adaptatif (120) et mettre le véhicule en mouvement dès réception d'un tel signal d'alerte.

8. Programme d'ordinateur comprenant des instructions d'ordinateur pour générer un signal d'alerte dans un véhicule équipé d'un système monté sur véhicule destiné à surveiller le trafic, le système comprenant :
- une caméra frontale (102) et un radar (116),
- une unité de traitement (106),
- un dispositif d'alerte (108, 110, 112, 114),
- un régulateur de vitesse adaptatif (120) permettant au véhicule de se déplacer sans l'intervention d'un conducteur et destiné à ajuster automatiquement la vitesse du véhicule afin de maintenir une distance de sécurité par rapport à des véhicules situés devant,
les instructions d'ordinateur comprenant un code logiciel amenant un processeur exécutant les instructions d'ordinateur à :
- détecter un passage d'un feu de signalisation du rouge au vert sur la base de signaux reçus par l'unité de traitement (106) depuis la caméra (102),
- détecter un mouvement devant le véhicule sur la base de signaux reçus par l'unité de traitement (106) depuis le radar (116),
- générer (205) un signal d'alerte à destination du dispositif d'alerte (108, 110, 112, 114) sur la base de l'entrée issue de la caméra (102) et du radar (116), alertant un conducteur d'un changement imminent de l'état du trafic,
et le programme d'ordinateur étant **caractérisé par** le fait de baser ledit signal d'alerte sur l'entrée combinée issue de la caméra (102) et du radar (116) et, si ledit régulateur de vitesse adaptatif (120) est activé,
- délivrer le signal d'alerte au régulateur de vitesse adaptatif (120) et mettre le véhicule en mouvement dès réception d'un tel signal d'alerte.

9. Véhicule (100) comprenant le système selon l'une quelconque des revendications 1 à 3.
